Europäisches Patentamt

European Patent Office

Office européen des brevets

(11) Veröffentlichungsnummer: **0 344 658**
**A2**

## (12) EUROPÄISCHE PATENTANMELDUNG

(21) Anmeldenummer: 89109589.5

(51) Int. Cl.⁴: **F16M 11/06**

(22) Anmeldetag: 27.05.89

(30) Priorität: 03.06.88 DE 3818949

(43) Veröffentlichungstag der Anmeldung:
06.12.89 Patentblatt 89/49

(84) Benannte Vertragsstaaten:
DE FR IT NL

(71) Anmelder: **Drägerwerk Aktiengesellschaft**
**Moislinger Allee 53-55**
**D-2400 Lübeck 1(DE)**

(72) Erfinder: **Schinkmann, Manfred, Dr.**
**Am Traveeck 32**
**D-2400 Lübeck(DE)**

(54) **Verstellbare Deckenhalterung für medizinische Räume.**

(57) Verstellbare Deckenhalterung (1) für medizinische Räume, insbesondere Operationssäle.

An einem Deckenbefestigungsteil (2) ist über ein Schwenkverbindungsteil (3) ein oberer Tragarm (7) und an diesem über ein Schwenkverbindungsteil (8) ein unterer Tragarm (12) angelenkt, so daß eine weitgehend freie Verstellbarkeit eines Geräteträgers (13) gewährleistet ist.

Eine insgesamt weniger aufwendige Bauweise als bei den bisherigen derartigen Deckenhalterungen bei mindestens ebenso guter Verstellbarkeit wird dadurch erreicht, daß eine die Schwenkachse des ersten Schwenkverbindungsteils (3) kreisförmig umgebende, an der Decke befestigbare Laufschiene (14) vorgesehen ist. In dieser läuft ein Schienenläufer (15), der über eine Aufhängung (16) mit dem zweiten Schwenkverbindungsteil (8) verbunden ist und dadurch Biegemomente, die um eine zu der Längsachse des oberen Tragarms (7) senkrecht verlaufende deckenparallele Achse wirken, aufnimmt.

EP 0 344 658 A2

FIG. 1

## Verstellbare Deckenhalterung für medizinische Räume

Die Erfindung betrifft eine verstellbare Deckenhalterung für medizinische Räume mit einem Deckenbefestigungsteil zur Befestigung an der Raumdecke, einem mit dem Deckenbefestigungsteil verbundenen ersten Schwenkverbindungsteil, einem oberen Tragarm, der an dem Schwenkverbindungsteil schwenkbar angelenkt ist und einem an dem unteren Tragarm angelenkten Träger für den zu halternden Gegenstand.

Derartige Deckenhalterungen werden in medizinischen Räumen, insbesondere in Operationssälen, vielfach verwendet. Sie dienen dazu, Gerätschaften, die von den Ärzten benötigt werden, griffbereit zur Verfügung zu halten. Durch die Anbringung an der Decke bleibt der Bodenraum in der Umgebung des Operationstisches weitgehend frei, so daß dieser von allen Seiten gut zugänglich ist. Ähnliche Gründe sprechen auch bei anderen medizinischen Anwendungen, beispielsweise im zahntechnischen Bereich, für den Einsatz von verstellbaren Deckenhalterungen.

Häufig verlaufen durch die Schwenkverbindungsteile und Tragarme Versorgungsleitungen, beispielsweise Gase, elektrische Energie, Wasser oder Vakuum zu dem Gerät. Deshalb ist auch der Ausdruck "Versorgungseinheit" für derartige Deckenhalterungen gebräuchlich.

Vielfach kommt es darauf an, daß die Deckenhalterung möglichst frei verstellbar ist. Der auf ihrem Träger stehende Gegenstand soll also in einem weiten Schwenkbereich möglichst frei ortsveränderlich angeordnet werden können.

Da einfache Deckenhalterungen mit nur einem Tragarm für viele Zwecke nicht ausreichen, wurden Deckenhalterungen mit zwei und mehr Tragarmen konstruiert (z.B. DE-A 30 34 013). Durch die gegenseitige Verschwenkbarkeit der beiden Arme kann der Geräteträger in einem weiten Bereich innerhalb eines Kreises, der durch die Summe der Radien der Arme beschrieben ist, bewegt werden. Sofern - was häufig der Fall ist - beide Tragarme gleich lang sind, ist der Träger innerhalb dieses Kreises frei einstellbar.

Zwei- oder mehrarmige Deckenhalterungen haben allerdings den Nachteil, daß ein großer konstruktiver Aufwand wegen der großen Biegemomente erforderlich ist, mit denen die auf dem Träger ruhende Last die Tragarme und die Schwenkverbindungs teile belastet. Infolgedessen müssen vor allem die Lager der Schwenkverbindungsteile sehr kräftig dimensioniert sein. Da zugleich eine feine Einstellbarkeit und ein leichter Lauf verlangt werden, sind hiermit erhebliche Kosten verbunden. Dies gilt insbesondere in Fällen, bei denen große Gesamtschwenkbereiche erforderlich sind.

Der Erfindung liegt die Aufgabe zugrunde, eine Deckenhalterung für medizinische Räume zu schaffen, die bei vermindertem konstruktivem Aufwand eine sehr gute Verstellbarkeit gewährleistet.

Zur Lösung dieser Aufgabe wird bei einer Deckenhalterung der eingangs bezeichneten Art vorgeschlagen, daß eine die Schwenkachse des ersten Schwenkverbindungsteils kreisbogenförmig umgebende, an der Decke befestigbare Laufschiene vorgesehen ist, in der ein Schienenläufer läuft und der Schienenläufer mit dem zweiten Schwenkverbindungsteil über eine Aufhängung derart verbunden ist, daß das Biegemoment, das um eine zu der Längsachse des ersten Schwenkarms senkrecht verlaufende dekkenparallele Achse wirkt, von der Aufhängung und damit von der Schiene aufgenommen wird.

Die erfindungsgemäße Konstruktion erlaubt eine wesentlich einfacherere Auslegung des ersten Schwenkverbindungsteils, weil dessen Lager keine Biegemomente mehr aufnehmen müssen.

Die Erfindung wird im folgenden anhand eines in den Figuren schematisch dargestellten Ausführungsbeispiels näher erläutert; es zeigen:

Fig. 1 eine perspektivische Darstellung einer erfindungsgemäßen Deckenhalterung

Fig. 2 eine Prinzipdarstellung einer erfindungsgemäßen Deckenhalterung in Seitenansicht

Fig. 3 eine erste Ausführungsform einer Laufschiene im Querschnitt

Fig. 4 eine zweite Ausführungsform einer Laufschiene im Querschnitt

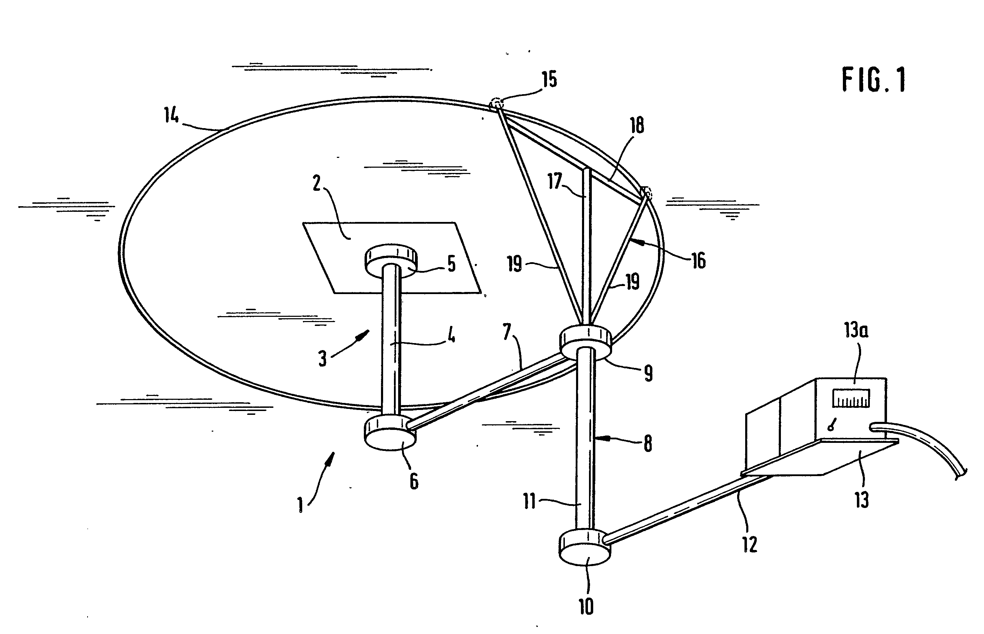

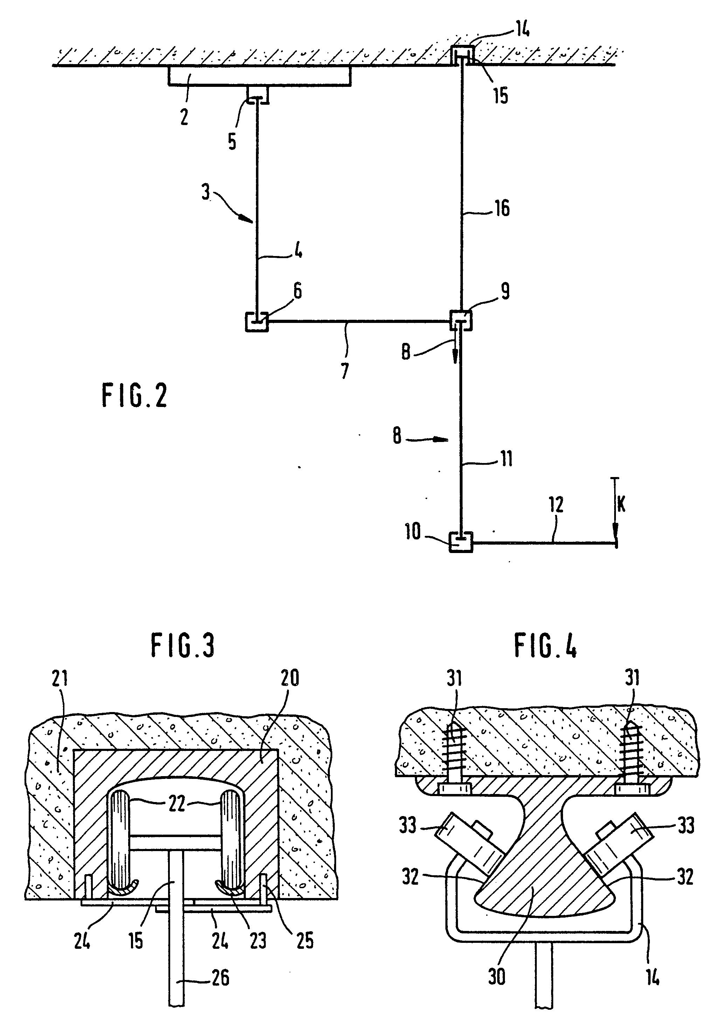

Die in den Figuren 1 und 2 dargestellten Deckenhalterung 1 ist mit Hilfe eines Deckenbefestigungsteils 2 an der Raumdecke befestigt. Ein erstes Schwenkverbindungsteil 3 erstreckt sich von dem Befestigungsteil 2 senkrecht nach unten. Es besteht aus einer Vertikalachse 4, einem oberen Lager 5 zur Verbindung mit dem Deckenbefestigungsteil 2 und einem unteren Lager 6, an welchem ein oberer horizontaler Tragarm 7 angelenkt ist. Mindestens eines der Lager 5,6 ist als Drehlager ausgebildet, so daß der obere Tragarm 7 um die Vertikalachse 4 um 360° geschwenkt werden kann.

Am jenseitigen Ende des oberen Tragarms 7 befindet sich das obere Lager 9 eines zweiten Schwenkverbindungsteils 8. Von dem oberen Lager 9 erstreckt sich wiederum eine Vertikalachse 11 senkrecht nach unten. Sie mündet in ein unteres Lager 10, an dem ein unterer Tragarm 12 angelenkt ist. Wiederum ist mindestens eines der Lager 9,10 als Drehlager ausgebildet, das es ermöglicht, den Tragarm 12 um die Vertikalachse 11 um 360°

2

zu verschwenken. Der am jenseitigen Ende des unteren Tragarms 12 befestigte Träger 13 dient der Aufnahme eines Gerätes 13a bzw. Gegenstandes, der mit der Deckenhalterung gehalten werden soll. Der Träger 13 kann dem jeweiligen Anwendungszweck entsprechend sehr verschieden gestaltet sein.

An der Raumdecke ist eine Laufschiene 14 befestigt, die die Vertikalachse 4 kreisförmig umgibt. In der Laufschiene 14 läuft ein Schienenläufer 15, der über eine Aufhängung 16 mit dem oberen Lager 9 des zweiten Schwenkverbindungsteils 8 verbunden ist.

Die Aufhängung 16 ist als Traggerüst, bestehend aus einer Vertikalstange 17, einer Horizontalstange 18 und zwei Verspannungen 19 ausgebildet. Dadurch werden Verwindungen in Umlaufrichtung der Schiene, also tangential zu dem von der Schiene 14 beschriebenen Kreis vermieden. Selbstverständlich sind dem Fachmann andere Konstruktionen eines hierzu geeigneten Traggerüsts geläufig.

Durch das Innere der Schwenkverbindungteile 3,8 und der Tragarme 7,12 verlaufen in bekannter Weise Versorgungsleitungen.

Figur 2 dient der Verdeutlichung der auf die verschiedenen Bauteile der Deckenhalterung 1 wirkenden Lastmomente. Dargestellt ist der Zustand maximaler Belastung, bei dem die Tragarme 7 und 12 parallel zueinander radial von der ersten Vertikalachse 4 weg verlaufen. Dadurch hat die Last K den maximalen Abstand von dieser Achse.

Bei den vorbekannten Deckenhalterungen war keine Aufhängung 16 vorgesehen, so daß die Last K in vollem Umfang von den Bauteilen getragen werden mußte. Insbesondere die Lager 5,6,9 und 10 mußten sehr kräftig dimensioniert werden.

Durch die Aufhängung 16 wird erfindungsgemäß die Last, die von dem zweiten Schwenkverbindungsteil 8 senkrecht nach unten wirkt und in der Figur mit dem Pfeil B symbolisiert wird, aufgenommen. Mit anderen Worten nimmt die Aufhängung 16 über den Schienenläufer und die Schiene jedes Biegemoment auf, das um eine zu der Längsachse des ersten Schwenkarms 7 senkrecht verlaufende deckenparalle Achse wirkt.

Infolgedessen können die Lager 5 und 6 wesentlich schwächer dimensioniert werden. Die beiden verbleibenden Lager 9 und 10 müssen zwar auch bei der erfindungsgemäßen Konstruktion noch ein Biegemoment aufgrund der Last K aufnehmen. Dieses ist jedoch erheblich geringer, als das Biegemoment, welches bei den bisherigen Konstruktionen auf die Lager 5 und 6 wirkte, weil einerseits die Ausladung des unteren Tragarms 12 erheblich kleiner ist als die maximale Ausladung der beiden Tragarme 7 und 12 zusammen und weil andererseits das Gewicht der kräftig dimensionierten Lager 9,10 selbst ebenfalls über die Aufhängung 16 von der Schiene 14 aufgenommen wird.

Im dargestellten Ausführungsbeispiel bildet die Schiene 14 einen vollen Kreis. Je nach Anwendungsfall, insbesondere wenn ein kleiner Schwenkbereich ausreicht, kann es jedoch auch zweckmäßig sein, eine Schiene zu verwenden, die einen Kreisbogen von weniger als 360° bildet.

Insbesondere bei Deckenhalterungen für schwere Lasten ist es vorteilhaft, den Schienenläufer 15 mit einem elektromotorischen Antrieb zu versehen, so daß die Schwenkbewegung um die Achse 3 leicht und fein dosiert steuerbar ist.

Die Figuren 3 und 4 zeigen zwei verschiedene Ausführungsformen besonders bevorzugter Schienen für die Erfindung. Die in Figur 3 dargestellte Schiene 20 ist in die Raumdekke 21 eingelassen. Sie ist nach dem Prinzip einer U-Schiene konstruiert, d.h. die Laufräder 22 laufen auf sich nach innen erstreckenden Vorsprüngen 23. Um die in medizinischen Räumen gewünschte Hygiene sicherzustellen, ist die Schiene 20 nach unten hin durch lamellenförmige Abdeckelemente 24 verschlossen, die jeweils um Achsen 25 gegen eine Federkraft verschwenkbar sind. Beim Umlauf des Läufers drückt dessen senkrechter Steg 26 die Abdeckelemente 24 zur Seite. Danach schließen sie sich sofort wieder und verhindern so das Eindringen von Staub.

Bei der in Figur 4 dargestellten Schienenversion wird die Hygiene durch eine besonders glattflächige Bauweise erreicht. Die Schiene 30 ist mit eingelassenen Schrauben 31 an der Decke befestigt. Die Laufflächen 32 für die Räder 33 des Läufers 15 verlaufen konisch nach außen und sind ebenfalls glatt und abgerundet gestaltet. Dadurch, daß keine schwer zugänglichen Winkel und Kanten vorhanden sind, wird die notwendige Hygiene gewährleistet.

## Ansprüche

1. Verstellbare Deckenhalterung (1) für medizinische Räume mit einem Deckenbefestigungsteil (2) zur Befestigung an der Raumdecke, einem mit dem Deckenbefestigungsteil (2) verbundenen ersten Schwenkverbindungsteil (3) einem oberen Tragarm (7), der an dem Schwenkverbindungsteil (3) schwenkbar angelenkt ist, einem unteren Tragarm (12), der über ein zweites Schwenkverbindungsteil (8) an dem ersten Tragarm (7) schwenkbar angelenkt ist und einem an dem unteren Tragarm angelenkten Träger (13) für den zu halternden Gegenstand (13a), **dadurch gekennzeichnet,** daß eine die Schwenkachse des ersten Schwenkverbindungsteils (3) kreisförmig umgebende, an der Decke befestigbare Laufschiene (14) vorgesehen ist, in der ein Schienenläufer (15) verläuft und der Schienenläufer (15) mit dem zweiten Schwenkverbindungsteil (8) über eine Aufhängung (16) derart verbunden ist, daß das Biegemoment, das um eine zu der Längsachse des ersten oberen Tragarms (7) senk recht verlaufende deckenparallele Achse wirkt, von der Aufhängung und damit von der Schiene aufgenommen wird.

2. Deckenhalterung nach Anspruch 1,
**dadurch gekennzeichnet, daß**
die Aufhängung als Traggerüst (17,18,19) derart ausgebildet ist, daß Verwindungen in Umlaufrichtung der Schiene vermieden werden.

3. Deckenhalterung nach Anspruch 1,
**dadurch gekennzeichnet, daß**
die Laufschiene als in die Decke (21) einzulassende Einbauschiene (20) ausgebildet ist.

4. Deckenhalterung nach Anspruch 1,
**dadurch gekennzeichnet, daß**
die Laufschiene als den Schienenläufer (15) umfassende Innenlaufschiene (20) ausgebildet ist und daß sie Abdeckelemente (24) aufweist, die in ihrem Ruhezustand den Durchlaufweg des Schienenläufers (15) abdecken und nur bei dessen Durchlauf freigeben.

5. Deckenhalterung nach Anspruch 1,
**dadurch gekennzeichnet, daß**
die Laufschiene als glattflächige, keine schwer zugängliche Winkel aufweisende Außenlaufschiene (30) ausgebildet ist.

6. Deckenhalterung nach Anspruch 1,
**dadurch gekennzeichnet, daß** der
Schienenläufer (15) elektromotorisch antreibbar ist.

FIG. 1

EP 0 344 658 A2

FIG.2

FIG.3

FIG.4